(19) Europäisches Patentamt
European Patent Office
Office européen des brevets

(11) **EP 4 411 437 A1**

(12) **EUROPEAN PATENT APPLICATION**

(43) Date of publication:
**07.08.2024 Bulletin 2024/32**

(21) Application number: **23181466.6**

(22) Date of filing: **26.06.2023**

(51) International Patent Classification (IPC):
**G02B 6/036** (2006.01)

(52) Cooperative Patent Classification (CPC):
**G02B 6/0365**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.02.2023 IN 202311007321**

(71) Applicant: **Sterlite Technologies Limited
Gurugram, Haryana 122102 (IN)**

(72) Inventors:
• **Khan, Amjad**
  **122102 Gurugram, Haryana (IN)**
• **Dorairaj, Chitra**
  **122102 Gurugram, Haryana (IN)**
• **Ekhande, Kailash**
  **122102 Gurugram, Haryana (IN)**
• **Reddy, E. Sudhakar**
  **122102 Gurugram, Haryana (IN)**

(74) Representative: **Petraz, Gilberto Luigi et al
GLP S.r.l.
Viale Europa Unita, 171
33100 Udine (IT)**

(54) **OPTICAL FIBER WITH IMPROVED MACRO-BENDING AND MICRO-BENDING PERFORMANCE**

(57)    The present disclosure relates to an optical fiber (100) with a core (102) extending along a central axis (112), a cladding (104) surrounding the core. The core comprises a first up-dopant and a second up-dopant. And, the cladding comprises a first cladding (106) surrounding the core, a second cladding (108) surrounding the first cladding, and a third cladding (110) surrounding the second cladding. The first cladding has a second up-dopant, the second cladding has down-dopant, and the third cladding is undoped. Further, the first cladding (106) has traces of the first up-dopant and the down-dopant, the second cladding (108) has traces of the second up-dopant, and the third cladding (110) has traces of the down-dopant.

FIG. 2

**Description**

**TECHNICAL FIELD**

Embodiments of the present disclosure relate to the field of optical fiber communications, and more particularly to a reduced diameter optical fiber with improved macrobending and microbending performance usable for an optical fiber communication system.

This application claims the benefit of Indian Application No. 202311007321 titled "OPTICAL FIBER WITH IMPROVED MACRO-BENDING AND MICRO-BENDING PERFORMANCE" filed by the applicant on February 6, 2023, which is incorporated herein by reference in its entirety.

**BACKGROUND ART**

The fields of data communications and telecommunications, optical fibers with small diameters are attracting attention as optical fibers that realize dense optical fiber cables. An optical fiber with a small diameter is in general an optical fiber in which a portion made of glass has a small diameter and the cladding diameter is small. Note that optical fibers with small diameters also include one whose outer circumference with a coating, formed such that the coating covers the outer circumference of a cladding, included is small because the cladding diameter is small.

The fields of data communications and telecommunications, optical fibers with small diameters are attracting attention as optical fibers that realize dense optical fiber cables. An optical fiber with a small diameter is in general an optical fiber in which a portion made of glass has a small diameter and the cladding diameter is small. Note that optical fibers with small diameters also include one whose outer circumference with a coating, formed such that the coating covers the outer circumference of a cladding, included is small because the cladding diameter is small.

Optical fiber cables are a critical component of a modern communications network across the globe. As the data and data rate requirement increases, more optical fibers are required in the network to support higher capacity and speed. Data centers are continuously trying to meet the challenges of delivering more bandwidth networks. However, attributes such as attenuation and bend loss are a few significant factors aiding the degradation of signals and channel capacity.

One way to improve the channel capacity is to increase the number of optical fibers in the network, which can be done by reducing the diameter of the optical fibers. However, as the diameter of the optical fibers decreases, attributes like micro-bending sensitivity, attenuation, and residual and applied stress may increase. To overcome the aforesaid drawbacks, a fiber clad diameter can be reduced by changing glass material composition of the optical fibers.

A prior art reference "US8200057B2" discloses an optical fiber with a core, an inner cladding, and an outer cladding. The inner cladding surrounds the core, and an outer cladding with a deep trench surrounds the inner cladding. The fiber with both core and inner cladding is doped with an up-dopant (Germanium) and a down-dopant (Fluorine). The outer cladding deep trench is doped with fluorine material. When both the core and the inner cladding are doped with Germanium, the fiber results more density fluctuations in the core and the inner cladding, an increased Rayleigh scattering which leads to high attenuation losses. Since both the core and inner cladding are doped with Germanium, the usage of Germanium is high which is not cost-effective way to manufacture the fiber and it also leads to an increased viscosity mismatch in the cladding interfaces of fiber.

Another prior art reference "US10094975B2" describes an optical fiber having a core doped with the up dopant such as chlorine. An inner cladding surrounds the core that is doped with down-dopant such as fluorine and an outer cladding surrounds the inner cladding that is down-doped with fluorine. When the inner cladding of the optical fiber is doped with down-dopant such as fluorine, the viscosity of inner cladding is increased and hence viscosity mismatch also increase, which further increases the structural relaxation time during fiber draw process leads to increase in scattering losses and attenuation losses in the optical fiber.

Yet another prior art reference "US11125937B2" describes an optical fiber that has a core that is doped with Germanium, an inner cladding surrounding the core, and an outer cladding surrounding the inner cladding. The outer cladding is chlorine-doped such that the relative refractive index varies as a function of radius. The radially varying relative refractive index profile of the outer cladding reduces excess stress in the core and inner cladding, which helps lower fiber attenuation while also reducing macro bend and micro bend loss. When the outer cladding of the optical fiber is chlorine-doped, the outer glass of the optical fiber become less viscous and soft which leads to increased draw tension in the core during the optical fiber draw process. The increased draw tension in the core is not desirable as this increase density fluctuations and scattering losses in the optical fiber.

While the prior arts cover various solutions for the aforesaid drawbacks related to material wastage and high production cost. However, there still remains a need to provide a technical solution that overcomes the aforementioned problems of the traditional optical fibers. Thus, the present disclosure provides a reduced diameter optical fiber with improved macro-bending and micro-bending performance.

## SUMMARY OF THE DISCLOSURE

According to the first aspect of the present disclosure, an optical fiber comprising one or more cores extending along a central axis of the optical fiber and a cladding surrounding the one or more core. In particular, the one or more core comprises at least a first up-dopant and a second up-dopant. Further, the cladding has at least the second up-dopant, at least one down-dopant, and an undoped region. The optical fiber has (i) an attenuation less than 0.324 dB/km at 1310 nm wavelength and less than 0.19 dB/km at 1550 nm wavelength, and (ii) a MAC number less than 6.8.

According to the second aspect of the present disclosure, the cladding comprises a first cladding surrounding the one or more core , a second cladding surrounding the first cladding , and a third cladding surrounding the second cladding. In particular, the first cladding has at least the second up-dopant, and the second cladding has at least one down-dopant, and the third cladding is undoped. Further, the first cladding has traces of the first up-dopant and the at least one down-dopant, and the third cladding has traces of the at least one down-dopant.

In accordance with an embodiment of the present disclosure , the first up-dopant is Germanium (Ge), and the second up-dopant is Chlorine (Cl), and at least one down-dopant is Fluorine (F).

According to the third aspect of the present disclosure, the optical fiber has

(i) a macro bend loss of 0.02 dB at 1turn, 10 mm bend radius, 1550 nm wavelength,
(ii) a macro bend loss of 0.07 dB at 1 turn, 10 mm bend radius, 1625 nm wavelength and 0.01 dB at 10 turns, 15 mm bend radius, 1550 nm wavelength,
(iii) a macro bend loss of 0.09 dB at 10 turns, 15 mm bend radius, 1625 nm wavelength,
(iv) a micro bending loss of 1.08 dB/km at 1550 nm wavelength and
(v) a micro bending loss of 1.379 dB/km at 1625 nm wavelength.

According to the fourth aspect of the present disclosure, the core is defined by a core refractive index $\Delta1$, the first cladding is defined by a first cladding refractive index $\Delta2$, the second cladding is defined by a second cladding refractive index $\Delta3$ and the third cladding is defined by a third cladding refractive index $\Delta4$ such that $\Delta1 > \Delta2 > \Delta3$ and $\Delta3 < \Delta4$.

In accordance with an embodiment of the present disclosure , the optical fiber has a clad diameter between 79.3 $\mu$m and 125.7 $\mu$m. Further, an absolute difference between absolute value of a first cladding refractive index percentage $\Delta2\%$ and a second cladding refractive index percentage $\Delta3\%$ is in a range of 0.26 to 0.30.

According to the fifth aspect of the present disclosure, the core is defined by a core thickness T1 in a range of 3.6 to 4.1 $\mu$m, the first cladding is defined by a first cladding thickness T2 in a range of 5.4 to 5.8 $\mu$m. The second cladding is defined by a second cladding thickness T3 in a range of 6 to 7 $\mu$m and the third cladding is defined by a third cladding thickness T4 in range of 23 to 45.6 such that T2 is greater than T1 and less than T3.

In accordance with an embodiment of the present disclosure , the core is defined by a core radius R1 in a range of 3.6 to 4.1 $\mu$m, the first cladding is defined by a first cladding radius R2 in a range of 9 to 10 $\mu$m, the second cladding is defined by a second cladding radius R3 in a range of 15 to 16 $\mu$m and the third cladding is defined by a third cladding radius R4 in a range of 39.5 to 63 $\mu$m such that a final clad diameter of the optical fiber is in a range of 79 to 126 $\mu$m .

In accordance with an embodiment of the present disclosure , the third cladding is covered by a first coating followed by a second coating , wherein the first coating is defined by a first coating thickness in a range of 15 to 43.5 $\mu$m and the second coating is defined by a second coating thickness in a range of 9 to 42.5 $\mu$m, wherein the second coating is a coloured coating.

In accordance with an embodiment of the present disclosure , the optical fiber has a ratio of the first coating thickness to the second coating thickness in a range of 0.5 and 3.

In accordance with an embodiment of the present disclosure , a novel refractive index (RI) profile of an optical fiber with an immediate fluorine trench surrounding an up-doped inner clad and an up-doped core region. The inner clad is doped with chlorine surrounding the up-doped core region and the core region is doped with germanium and chlorine. The enhanced design of the RI profile of the optical fiber reduces macro-bending and micro-bending sensitivity.

These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a cross-sectional view of an optical fiber in accordance with an embodiment of the present disclosure ;

Fig. 2 is an exemplary refractive index (RI) profile of the optical fiber in accordance with an embodiment of the present disclosure ;

Fig. 3 is a snapshot illustrating concentration profiles of a core, a first cladding, a second cladding and a third cladding of the optical fiber in accordance with an embodiment of the present disclosure ;

Fig. 4 is a graph illustrating variation of concentration of dopants in the RI profile including diffusion in accordance with an embodiment of the present disclosure ;

Fig. 5 is a snapshot illustrating the RI profile of first cladding of the optical fiber in accordance with an embodiment of the present disclosure ;

Fig. 6 is a snapshot illustrating the RI profile of second cladding of the optical fiber in accordance with an embodiment of the present disclosure ;

Fig. 7 is a snapshot illustrating a cross-sectional view of an optical fiber having coating in accordance with an embodiment of the present disclosure ;

Fig. 8 is a snapshot illustrating a cross-sectional view of an optical fiber having multiple cores in accordance with an embodiment of the present disclosure .

The optical fiber illustrated in the accompanying drawings, which like reference letters indicate corresponding parts in the various figures. It should be noted that the accompanying figure is intended to present illustrations of exemplary embodiments of the present disclosure . This figure is not intended to limit the scope of the present disclosure . It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

An optical fiber refers to a medium associated with transmission of information over long distances in the form of light pulses. The optical fiber uses light to transmit voice and data communications over long distances when encapsulated in a jacket/sheath. The optical fiber may be of ITU.T G.657.A2 category. Alternatively, the optical fiber may be of ITU.T G.657.A1 or G.657.B3 or G.652.D or other suitable category or the optical fiber may be a multi-core optical fiber. The ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis. The optical fiber may be a bend insensitive fiber that has less degradation in optical properties or less increment in optical attenuation during multiple winding/unwinding operations of an optical fiber cable. The optical fiber comprises one or more cores, one or more clads or claddings and/or one or more coating layers, where a core is a light-carrying portion of the optical fiber using total internal reflection in which optical signal is confined and a cladding is a region that prevents loss of signal by preventing any signal leakage from the core. The refractive index of the cladding is lower than the refractive index of core in order to cause reflection within the core so that light waves are transmitted through the optical fiber. The coating protects the optical fiber from moisture and physical damage and also improves the strength in terms of heat and cold resistance.

Term "refractive index" as used herein is referred to as the measure of change of speed of light from one medium to another and is particularly measured in reference to speed of light in vacuum. More specifically, the refractive index facilitates measurement of bending of light from one medium to another medium. The term refractive index profile" of the optical fiber as used herein is referred to as the distribution of refractive indexes in the optical fiber from the core to the outmost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

Term "viscosity" is the measure of resistance to flow.

Term "core" of the optical fiber (100) as used herein is referred to as an inner most cylindrical structure present in the center of the optical fiber (100), that is configured to guide the light rays inside the optical fiber (100). The core (102) may be a glass core.

Term "up-doping" is referred to as adding doping materials to facilitate increase in the refractive index of a particular layer or part of the optical fiber. The materials configured to facilitate up-doping are known as up-dopants.

Term "down-doping" is referred to as adding doping materials to facilitate the decrease in the refractive index of a particular layer or part of the optical fiber. The materials configured to facilitate down-doping are known as down-dopants.

Term "cladding" of the optical fiber (100) as used herein is referred to as one or more layered structure covering the core (102) of the optical fiber (100) from the outside, that is configured to possess a lower refractive index than the refractive index of the core (102) to facilitate total internal reflection of light rays inside the optical fiber (100).

Term coating thickness ratio is defined as a ratio of the first coating thickness to the second coating thickness.

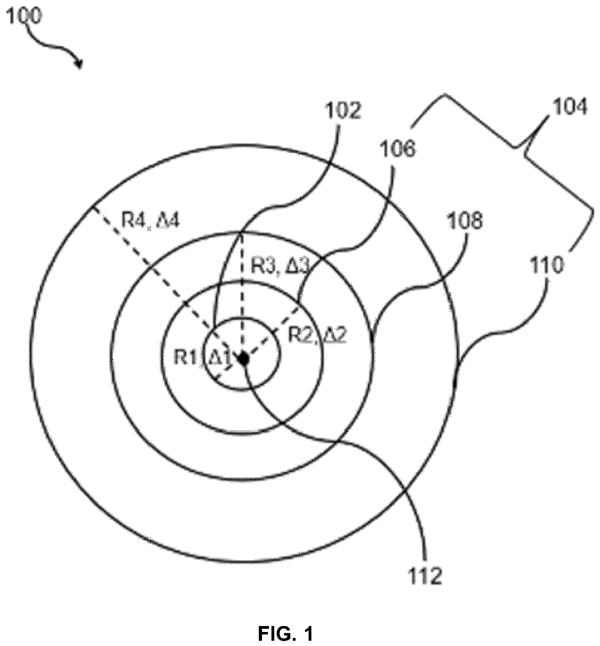

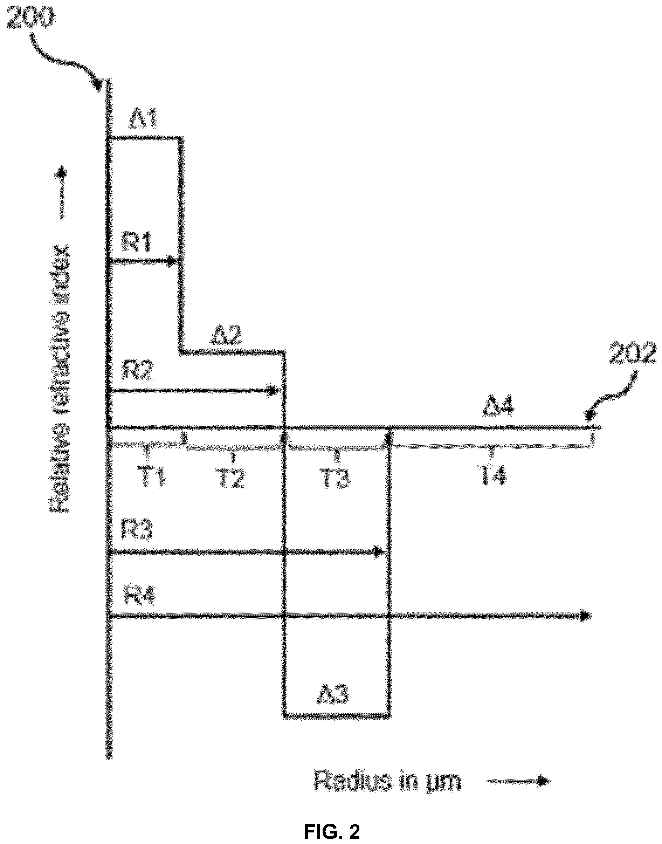

Fig. 1 is a pictorial snapshot illustrating a cross-sectional view of an optical fiber in accordance with an embodiment of the present disclosure . And, Fig. 2 is an exemplary refractive index (RI) profile of the optical fiber in accordance with an embodiment of the present disclosure .

Now simultaneously referring to Fig.1 and Fig. 2. The optical fiber (100) comprises a core (102) extending along a central axis (112) of the optical fiber (100). The core (102) further comprises at least a first up-dopant and a second up-dopant. In particular, the first up-dopant may be germanium, for example and the second up-dopant may be chlorine. Addition of germanium increases the refractive index in the core (102). Further, germanium may be present in a range of 2500 to 3200 ppm, preferably 3000 ppm and chlorine may be present in a range of 1850 to 2100 ppm in the core (102). Furthermore, germanium is present in a range of 3.5 to 4.5% (mol%), preferably 4% (mol%).

If chlorine and germanium are doped beyond the given range, bubbles may be generated in the core (102) and below the given range, viscosity matching at a core-cladding interface may be impacted.

In accordance with an embodiment of the present disclosure , the core (102) is defined by a core radius R1 and a core refractive index $\Delta 1$. In particular, the core radius R1 is in a range of 3.6 to 4.1 $\mu$m and the core refractive index $\Delta 1$ is in a range of 4.9 to 5.5. Further, $\Delta 1\%$ is in a range of 0.34 to 0.38. The core (102) is further defined by a core thickness T1 in a range of 3.6 to 4.1 $\mu$m.

In accordance with an embodiment of the present disclosure , the optical fiber (100) further comprises a cladding (104) surrounding the core (102).The cladding (104) further comprises a first cladding (106) surrounding the core (102), a second cladding (108) surrounding the first cladding (106), and a third cladding (110) surrounding the second cladding (108). Particularly, the first cladding (106) comprises of silica glass doped with the second up-dopant, the second cladding (108) has at least one down-dopant, and the third cladding (110) is undoped.

The first cladding (106) is up-doped with chlorine, the second cladding (108) is down-doped with fluorine, for example, forming an immediate trench to the first cladding (106) and the third cladding (110) is pure silica. In particular, a trench is referred as a down doped region with a higher down dopant concentration to decrease the refractive index of the down doped region with respect to pure silica and increase the relative refractive index of the core region. The undoped means a region of the optical fiber contains a dopant not intentionally added to the region during fabrication, but the term does not exclude low levels of background doping that may be inherently incorporated during the fabrication process. Such background doping levels are very low in amount that does not have an insignificant effect on the refractive index of the undoped region.

In accordance with an embodiment of the present disclosure, chlorine may be present in a range of 2490 to 2800 ppm, preferably 2680 ppm in the first cladding (106). and fluorine may be present in a range of 0.8 to 1% (mol%) in the second cladding (108). If chlorine and fluorine are doped beyond the given range, bubbles may be formed in the cladding (104) and below the given range, viscosity matching at the core-cladding interface may be impacted.

Further, the first cladding (106) may have traces of the first up-dopant and the at least one down-dopant, the second cladding (108) may have traces of the second up-dopant. And the third cladding (110) may have traces of the at least one down-dopant.

In accordance with one embodiment of the present disclosure , the first cladding (106) may have traces of the first up-dopant in 7.1% to 16.1% region of a total region of the first cladding (106) and the traces of at least one down-dopant in 8.9% to 17.9% region of the total region of the first cladding (106).

In accordance with another embodiment of the present disclosure , the third cladding (110) may have traces of the at least one down-dopant in 1.1% to 4.3% region of a total region of the third cladding (110).

In accordance with another embodiment of the present disclosure , when the diameter of the cladding (104) of the optical fiber (100) is equal to 80 ± 0.7, the third cladding (110) may have traces of the at least one down-dopant in 2.1% to 4.3% region of the total region of the third cladding (110). And when the diameter of the cladding (104) of the optical fiber (100) is equal to 125 ± 0.7, the third cladding (110) may have traces of the at least one down-dopant in 1.1% to 2.2% region of the total region of the third cladding (110).

In accordance with an embodiment of the present disclosure , the traces of dopants may be induced in another region through the diffusion process during Outside Vapor Deposition (OVD) process. These traces are negligible and it is difficult to be quantified and there is no measurable impact of these traces even though they have a minute role in viscosity matching between different glass regions during the OVD process.

In accordance with an embodiment of the present disclosure , the up-doping, in the aforesaid ranges, reduces the viscosity mismatch between the core (102) and the first cladding (106) *i.e.,* the core-cladding interface and also helps in reducing viscosity mismatch between the first cladding (106) and the second cladding (108), which further reduces structural relaxation time during fiber draw and hence scattering and attenuation losses.

In accordance with an embodiment of the present disclosure , the concentration of the first up-dopant in the core (102), the concentration of the second up-dopant in the first cladding (106) and the concentration of the down-dopant in the second cladding (108) is used to match the viscosity. Mismatch of the viscosity in the optical fiber leads to displacement of the core (102) to the first cladding (106) at a given temperature, such as temperatures between the softening points of the core (102) to the first cladding (106) and the displacement causes interfacial fluctuations that become permanent when the glass is cooled and, thereby, increases attenuation. Matching the viscosity of the core (102), the first cladding (106) and the second cladding (108) reduces interfacial fluctuation.

In accordance with an embodiment of the present disclosure , the addition of chlorine in the first cladding (106) reduces residual stress between the core (102) and the first cladding (106). In particular, the residual stress is a stress that develops over the entire length from thermal expansion mismatch between the core (102) and the first cladding (106) as well as draw induced stress. Further, down-doping with fluorine in the second cladding (108) reduces RI as well as viscosity and creates trench which helps in increasing mode confinement (i.e., leaking loss due to bending and stress) and hence reduces macro-bending and micro-bending losses, which is very critical as bend loss sensitivity increase as we move towards lower diameter optical fibers *i.e.,* < 125 μm.

Typically, the bending loss in an optical fiber under pressure is related linearly to the resulting lateral pressure, and the pressure on the core can be minimized by providing a cushion in the core region, which is done by coating thickness changes and providing a trench between the core and an outer cladding of the optical fiber. When the external force is applied to the optical fiber, the trench protects the core from deformation.

In accordance with an embodiment of the present disclosure , the combination of both up-doping and down-doping helps in reducing viscosity mismatch between the core (102), the first cladding (106), the second cladding (108) and the third cladding (110), which provides benefit in attenuation, macro-bend, and micro-bend losses in lower-diameter optical fibers. The aforesaid combination also reduces losses due to applied stress that is imparted to the optical fiber (100) by bending, pulling or twisting during processing, handling and deployment. In a reduced diameter optical fiber (100), the aforesaid ranges of radius, thickness and refractive index are important to achieve the characteristics and properties of the optical fiber (100) of the present disclosure.

In accordance with an embodiment of the present disclosure , the first cladding (106) is defined by a first cladding radius R2 and a first cladding refractive index Δ2, the second cladding (108) is defined by a second cladding radius R3 and a second cladding refractive index Δ3 and the third cladding (110) is defined by a third cladding radius R4 and a third cladding refractive index Δ4 such that Δ1 > Δ2 > Δ3 and Δ3 < Δ4.

Table 2 is a tabular representation illustrating peak and average values of Δ1, Δ2, Δ3 with reference to a horizontal axis (202) representing pure silica:

Table 2

|  | Peak | Avg. |
|---|---|---|
| Δ1 | 5.5 | 5.1 |

(continued)

|  | Peak | Avg. |
|---|---|---|
| Δ2 | 0.04 | 0.025 |
| Δ3 | -5.3 | -4.4 |

In accordance with an embodiment of the present disclosure , the first cladding radius R2 is in a range of 9 to 10 $\mu$m, the second cladding radius R3 is in a range of 15 to 16 $\mu$m, and the third cladding radius R4 is in a range of 39 to 40 $\mu$m such that a final clad diameter of the optical fiber (100) is in a range of 80 to 125 $\mu$m with a tolerance of $\pm$ 0.7 $\mu$m. Moreover, the first cladding refractive index Δ2 is in a range of 0.2 to 0.4, the second cladding refractive index Δ3 is in a range of -3.9 to -5.3, and the third cladding refractive index Δ4 is in a range of 0 to 0.02. Further, Δ2% is in a range of 0.02 to 0.04, Δ3% is in a range of -0.27 to -0.34 and Δ4% is in a range of 0 to 0.002.

In an aspect of the present disclosure, an absolute difference between absolute value of a first cladding refractive index percentage Δ2% and a second cladding refractive index percentage Δ3% may be in a range of 0.26 to 0.30. A refractive index Δi and a refractive index percentage Δi % of the core (102), first cladding (106), second cladding (108) and third cladding (110) is determined using below equations.

$$\Delta i = (ni - n) \, X \, 1000$$

$$\Delta i \, \% = \frac{ni - n}{n} \, X \, 100$$

where, *ni* is refractive index of ith region of the optical fiber (100).

 i = 1 for core region
 i = 2 for first cladding region
 i = 1 for second cladding region
 i = 1 for third cladding region
 n is refractive index of pure silica.

In accordance with an embodiment of the present disclosure , the first cladding (106) is further defined by a first cladding thickness T2, the second cladding (108) is further defined by a second cladding thickness T3 and the third cladding (110) is further defined by a third cladding thickness T4. In particular, the first cladding thickness T2 is in a range of 5.4 to 5.8 $\mu$m, the second cladding thickness T3 is in a range of 6 to 7 $\mu$m, and the third cladding thickness T4 is in range of 23 to 45.6 $\mu$m such that T2 is greater than T1 and less than T3.

In accordance with an embodiment of the present disclosure , the cladding (104) has a diameter (i.e., clad diameter) between 79.3 $\mu$m and 125.7 $\mu$m. Alternatively, the cladding (104) of the optical fiber (100) may have a diameter that is equal to 80 $\pm$ 0.7 $\mu$m such that the third cladding thickness T4 is in range of 23 to 24 $\mu$m. In a reduced diameter optical fiber (100), the aforesaid ranges of radius, thickness and refractive index are important to achieve the characteristics and properties of the optical fiber (100) of the present disclosure.

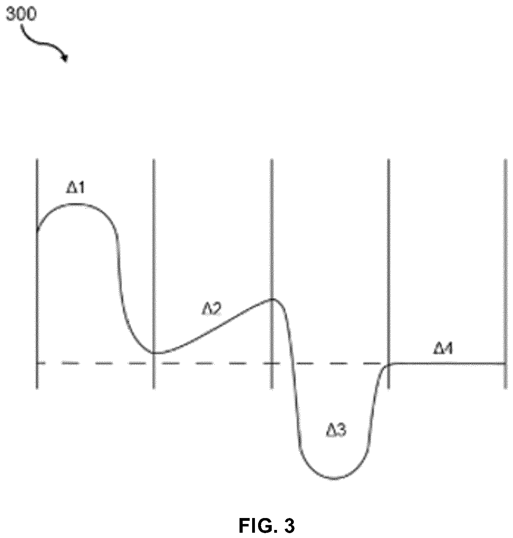

Fig. 3 is a snapshot illustrating concentration profiles of a core, in accordance with an embodiment of the present disclosure . Different concentration profiles (300) of the core (102) include the first cladding (aka "inner cladding") (106), the second cladding (aka "outer cladding with a trench") (108) and the third cladding (aka "outer cladding undoped") (110).

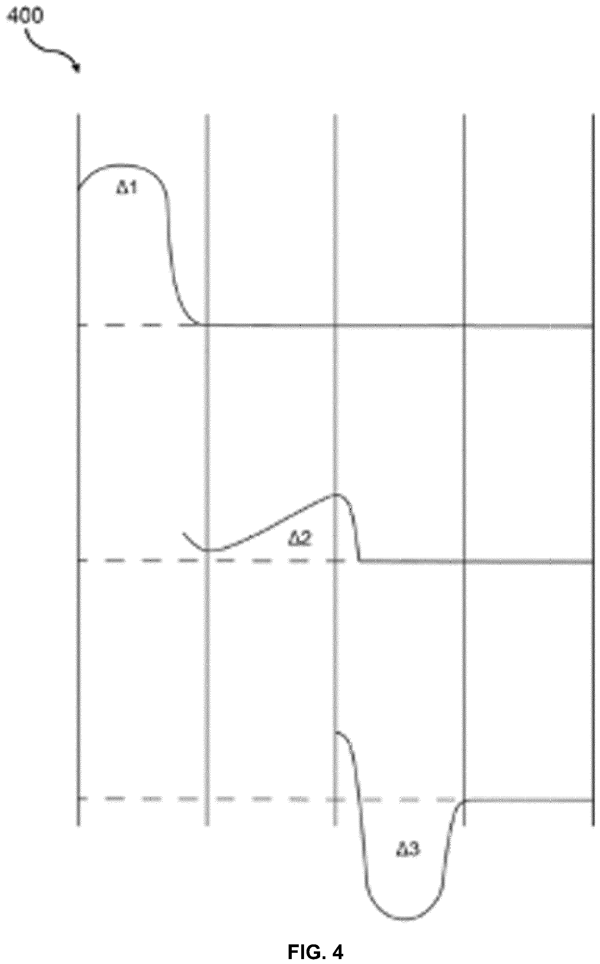

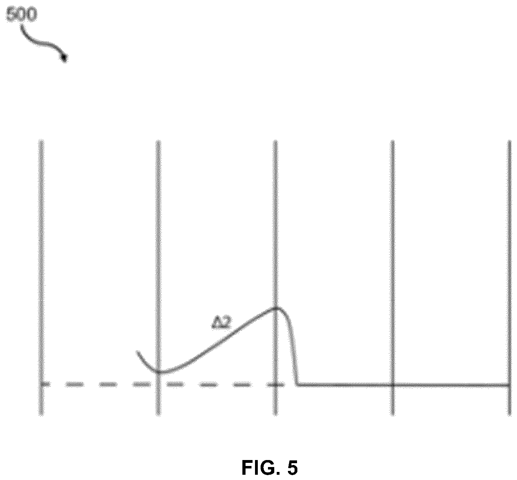

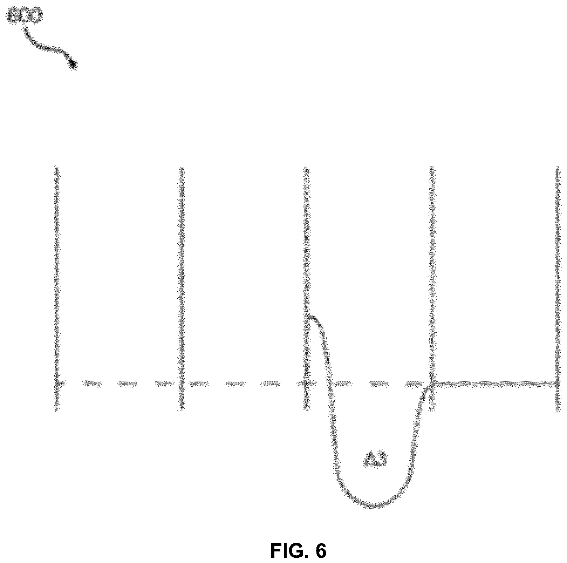

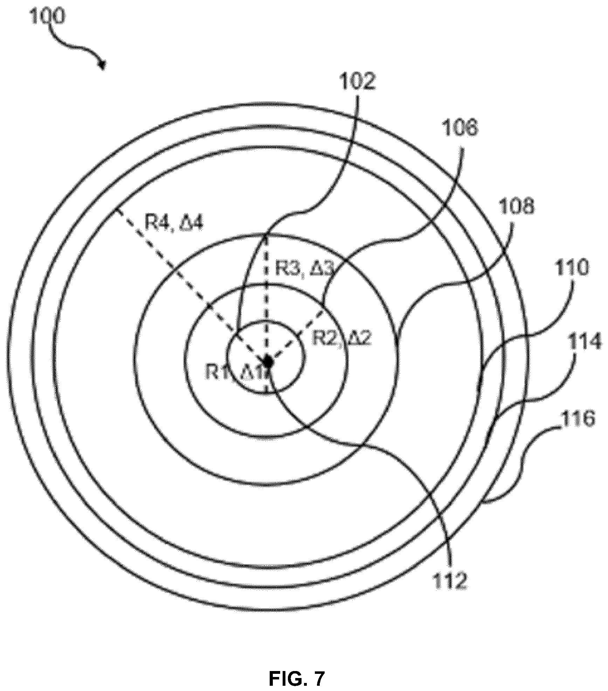

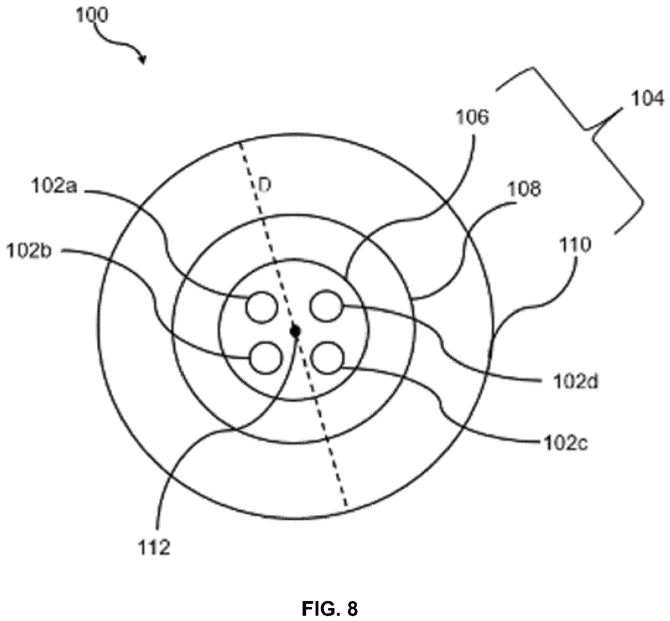

Fig. 4 illustrates a graph (400) showing variation of concentration of dopants in the RI profile (300) including diffusion. Fig. 5 is the RI profile (500) with an up-doped first cladding. Fig. 6 is the RI profile (600) with a down-doped second cladding in accordance with embodiments of the present disclosure. Fig. 7 is a snapshot illustrating a cross-sectional view of an optical fiber having coating. Fig. 8 is a snapshot illustrating a cross-sectional view of an optical fiber having multiple cores in accordance with an embodiment of the present disclosure .

Making simultaneous reference to Fig. 1- Fig. 8.The optical fiber (100) may have coatings, where the third cladding (110) is covered by a first coating (114) followed by a second coating (116). In particular, the first coating (114) is a protective primary coating around the third cladding (110) acting as a soft layer and the second coating is a protective secondary coating around the primary coating acting as a hard layer. Moreover, the first coating (114) is defined by a first coating thickness having a range of 15 to 43.5 $\mu$m and the second coating (116) is defined by a second coating thickness having a range of 9 to 42.5 $\mu$m. Further, the second coating (116) may be a coloured coating.

A coating thickness ratio may be in a range of 0.5 and 3. The optical fiber (100) has a coating diameter of about 158 $\mu$m to 250 $\mu$m.

In an aspect of the present disclosure, the cladding (104) of the optical fiber (100) may have a diameter that is equal to 80 $\pm$ 0.7 $\mu$m such that the first coating thickness may be in a range of 15 to 30 $\mu$m and the second coating thickness may be in a range of 9 to 20 $\mu$m. Alternatively, the cladding (104) of the optical fiber (100) may have a diameter that is equal to 125 $\pm$ 0.7 $\mu$m such that the first coating thickness may be in a range of 20 to 43.5 $\mu$m and the second coating thickness may be in a range of 19 to 42.5 $\mu$m. In accordance with an embodiment of the present disclosure , the optical fiber (100) may have a plurality of cores (102) of which first through fourth cores (102a-102d) are shown in Fig. 8. In particular, the plurality of cores (102) may be a glass core. Moreover, the plurality of cores (102) comprises at least a first up-dopant and a second up-dopant. The optical fiber (100) comprising the plurality of cores (102) may be termed as a multi-core optical fiber that includes multiple core regions, each capable of communicating the optical signals between transceivers including transmitters and receivers which may allow for parallel processing of multiple optical signals. Further, the plurality of cores (102) may be arranged in a predefined lattice on the cross-section of the optical fiber (100) that is perpendicular to an axis extending parallelly along the central axis (112) of the optical fiber (100). As illustrated, the predefined lattice is a square lattice. Alternatively, the predefined lattice may be a hexagonal lattice. It will be apparent to a person skilled in the art that the plurality of cores (102) are shown to be arranged in the square lattice to make the illustrations concise and clear and should not be considered as a limitation of the present disclosure. In various alternate aspects, the plurality of cores (102) may be arranged in any type of the predefined lattice, without deviating from the scope of the present disclosure.

In some aspects of the present disclosure, each core of the plurality of cores (102) may have a core radius. The core radius is measured from a central axis of the core (not shown). Specifically, the first through fourth cores (102a-102d) may have the core radius. In one aspect of the present disclosure, the core radius of each core of the plurality of cores (102) may be equal. Alternatively, the core radius of each core of the plurality of cores (102) may be different.

In accordance with an embodiment of the present disclosure , the optical fiber (100) further comprises a cladding (104) surrounding the plurality of cores (102). The cladding (104) comprises a first cladding (106) surrounding the core (102), a second cladding (108) surrounding the first cladding (106), and a third cladding (110) surrounding the second cladding (108). The first cladding (106) comprises silica glass doped with the second up-dopant, the second cladding (108) has at least one down-dopant, and the third cladding (110) is undoped. The first cladding (106) is up-doped with chlorine, the second cladding (108) is down-doped with fluorine, for example, forming an immediate trench adjacent to the first cladding (106) and the third cladding (110) is pure silica. The cladding (104) of the optical fiber (100) may have a cladding diameter D less than or equal to 125 $\pm$ 0.7 $\mu$m.

In accordance with an embodiment of the present disclosure , the optical fiber (100) has low attenuation and low macro bending loss and micro bending loss. In particular, the attenuation measures the amount of light/signal lost between input and output. Further, the micro bending loss refers to small-scale "bends" in the optical fiber, often from pressure exerted on the optical fiber itself as when it is cabled and the other elements in the cable press on it and the macro bending loss refers to a loss caused by bending the optical fiber at a predetermined curvature. Moreover, the optical fiber (100) has an attenuation less than 0.324 dB/km at 1310 nm wavelength and less than 0.19 dB/km at 1550 nm wavelength. Further, the optical fiber (100) has a macro bend loss of 0.02 dB at 1 turn, 10 mm bend radius and 1550 nm wavelength, 0.07 dB at 1 turn, 10 mm bend radius and 1625 nm wavelength, 0.01 dB at 10 turns, 15 mm bend radius and 1550 nm wavelength and 0.09 dB at 10 turns, 15 mm bend radius and 1625 nm wavelength. Furthermore, the optical fiber (100) has a micro bending loss of 1.08 dB/km at 1550 nm wavelength and 1.379 dB/km at 1625 nm wavelength.

In accordance with an embodiment of the present disclosure , when the diameter of the cladding (104) of the optical fiber (100) is equal to 125 $\pm$ 0.7 $\mu$m, the optical fiber (100) has a micro bending loss of 0.3 dB/km at 1550 nm wavelength and 0.35 dB/km at 1625 nm wavelength

In accordance with an embodiment of the present disclosure , , the optical fiber (100) has a MAC number less than 6.8. The MAC number refers to mode field diameter (MFD) divided by cut-off wavelength, wherein the mode field diameter describes the distribution of light intensity observed at the cross-section of a single-mode optical fiber and the cut-off wavelength is defined as a wavelength above which a single-mode fiber will support and propagate only one mode of light.

Advantageously, the present disclosure proposes a reduced diameter optical fiber with improved macrobending and microbending performance with low attenuation losses.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An optical fiber (100) with an improved macrobending and microbending performance **characterized in that**:

   one or more core (102) extending along a central axis (112) of the optical fiber (100), wherein the one or more core (102) comprises at least a first up-dopant and a second up-dopant; and
   a cladding (104) surrounding the one or more core (102), wherein the cladding (104) has at least the second up-dopant, at least one down-dopant, and an undoped region,

   wherein the optical fiber (100) has (i) an attenuation less than 0.324 dB/km at 1310 nm wavelength and less than 0.19 dB/km at 1550 nm wavelength, and (ii) a MAC number less than 6.8.

2. The optical fiber (100) as claimed in claim 1, wherein the cladding (104) comprises a first cladding (106) surrounding the one or more core (102), a second cladding (108) surrounding the first cladding (106), and a third cladding (110) surrounding the second cladding (108).

3. The optical fiber (100) as claimed in claim 1, wherein the first cladding (106) has at least the second up-dopant, and the second cladding (108) has at least one down-dopant, and wherein the third cladding (110) is undoped.

4. The optical fiber (100) as claimed in claim 1, wherein the first up-dopant is Germanium (Ge), and the second up-dopant is Chlorine (Cl), and at least one down-dopant is Fluorine (F).

5. The optical fiber (100) as claimed in claim 1, wherein the optical fiber (100) has

   (i) a macro bend loss of 0.02 dB at 1turn, 10 mm bend radius, 1550 nm wavelength,
   (ii) a macro bend loss of 0.07 dB at 1 turn, 10 mm bend radius, 1625 nm wavelength and 0.01 dB at 10 turns, 15 mm bend radius, 1550 nm wavelength,
   (iii) a macro bend loss of 0.09 dB at 10 turns, 15 mm bend radius, 1625 nm wavelength,
   (iv) a micro bending loss of 1.08 dB/km at 1550 nm wavelength and
   (v) a micro bending loss of 1.379 dB/km at 1625 nm wavelength.

6. The optical fiber (100) as claimed in claim 1, wherein the first cladding (106) has traces of the first up-dopant and the at least one down-dopant, and the third cladding (110) has traces of the at least one down-dopant.

7. The optical fiber (100) as claimed in claim 1, wherein the core (102) is defined by a core refractive index $\Delta 1$, the first cladding (106) is defined by a first cladding refractive index $\Delta 2$, the second cladding (108) is defined by a second cladding refractive index $\Delta 3$ and the third cladding (110) is defined by a third cladding refractive index $\Delta 4$ such that $\Delta 1 > \Delta 2 > \Delta 3$ and $\Delta 3 < \Delta 4$.

8. The optical fiber (100) as claimed in claim 1, wherein a core refractive index $\Delta 1$ is in a range of 4.9 to 5.5, a first cladding refractive index $\Delta 2$ is in a range of 0.2 to 0.4, a second cladding refractive index $\Delta 3$ is in a range of -3.9 to -5.3, and a third cladding refractive index $\Delta 4$ is in a range of 0 to 0.02.

9. The optical fiber (100) as claimed in claim 1, wherein the optical fiber (100) has a clad diameter between 79.3 $\mu$m and 125.7 $\mu$m.

10. The optical fiber (100) as claimed in claim 1, wherein an absolute difference between absolute value of a first cladding refractive index percentage Δ2% and a second cladding refractive index percentage Δ3% is in a range of 0.26 to 0.30.

11. The optical fiber (100) as claimed in claim 1, wherein the core (102) is defined by a core thickness T1 in a range of 3.6 to 4.1 μm, the first cladding (106) is defined by a first cladding thickness T2 in a range of 5.4 to 5.8 μm.

12. The optical fiber (100) as claimed in claim 1, wherein the second cladding (108) is defined by a second cladding thickness T3 in a range of 6 to 7 μm and the third cladding (110) is defined by a third cladding thickness T4 in range of 23 to 45.6 such that T2 is greater than T1 and less than T3.

13. The optical fiber (100) as claimed in claim 1, wherein the core (102) is defined by a core radius R1 in a range of 3.6 to 4.1 μm, the first cladding (106) is defined by a first cladding radius R2 in a range of 9 to 10 μm, the second cladding (108) is defined by a second cladding radius R3 in a range of 15 to 16 μm and the third cladding (110) is defined by a third cladding radius R4 in a range of 39.5 to 63 μm such that a final clad diameter of the optical fiber (100) is in a range of 79 to 126 μm .

14. The optical fiber (100) as claimed in claim 1, wherein the third cladding (110) is covered by a first coating (114) followed by a second coating (116), wherein the first coating (114) is defined by a first coating thickness in a range of 15 to 43.5 μm and the second coating (116) is defined by a second coating thickness in a range of 9 to 42.5 μm, wherein the second coating (116) is a coloured coating.

15. The optical fiber (100) as claimed in claim 1, wherein the optical fiber (100) has a ratio of the first coating thickness to the second coating thickness in a range of 0.5 and 3.

**FIG. 1**

**FIG. 2**

**FIG. 3**

400

Δ1

Δ2

Δ3

**FIG. 4**

**FIG. 5**

600

FIG. 6

FIG. 7

FIG. 8

Europäisches
Patentamt

European
Patent Office

Office européen
des brevets

# EUROPEAN SEARCH REPORT

**Application Number**

EP 23 18 1466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/139333 A1 (ZHANG LEI [CN] ET AL) 19 May 2016 (2016-05-19) <br> * paragraphs [0004] – [0030] * <br> * paragraphs [0053] – [0061] * <br> * tables 3, 4 * <br> * figures * <br> ----- | 1-15 | INV. <br> G02B6/036 |

TECHNICAL FIELDS
SEARCHED       (IPC)

G02B

The present search report has been drawn up for all claims

| Place of search | Date of completion of the search | Examiner |
|---|---|---|
| The Hague | 7 December 2023 | Kloppenburg, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 1466

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2023

| Patent document cited in search report | | Publication date | Patent family member(s) | | Publication date |
|---|---|---|---|---|---|
| US 2016139333 | A1 | 19-05-2016 | CN 102590933 | A | 18-07-2012 |
| | | | KR 20140016980 | A | 10-02-2014 |
| | | | US 2016139333 | A1 | 19-05-2016 |
| | | | WO 2013104244 | A1 | 18-07-2013 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311007321
- US 8200057 B2
- US 10094975 B2
- US 11125937 B2